# EUROPEAN PATENT APPLICATION

(11) **EP 4 170 885 A1**
(43) Date of publication of application: **26.04.2023**
(21) Application number: 21833948.9
(22) Date of filing: 28.06.2021
(51) Int. Cl.: H02M 7/00, H02J 3/01

(54) **RIPPLE CURRENT CONTROL METHOD AND APPARATUS, ELECTRONIC DEVICE, AND COMPUTER-READABLE STORAGE MEDIUM**

(30) Priority: 29.06.2020 CN 202010616309
(71) Applicant: ZTE Corporation, Shenzhen, Guangdong 518057 (CN)
(72) Inventor: E, Ben, Shenzhen, Guangdong 518057 (CN); ZHOU, Jianping, Shenzhen, Guangdong 518057 (CN); LIN, Guoxian, Shenzhen, Guangdong 518057 (CN); DONG, Xiufeng, Shenzhen, Guangdong 518057 (CN); WANG, Qia, Shenzhen, Guangdong 518057 (CN); FAN, Shanshan, Shenzhen, Guangdong 518057 (CN); CUI, Yulong, Shenzhen, Guangdong 518057 (CN); ZHANG, Wei, Shenzhen, Guangdong 518057 (CN)
(74) Representative: Ipsilon
(86) International application number: PCT/CN2021/102713
(87) International publication number: WO 2022/001943

(57) **Abstract**

Provided are a ripple current control method and device, an electronic apparatus, and a computer-readable storage medium. The current ripple control method includes: if a phase-to-neutral voltage of a certain phase meets a phase shift condition, respectively determining a driving signal of each switching tube corresponding to the certain phase according to a first carrier wave corresponding to the certain phase; and a phase of the first carrier wave is different from a phase of a second carrier wave corresponding to the certain phase by 180°, and the second carrier wave is a carrier wave configured to determine the driving signal of each switching tube corresponding to the certain phase when the phase-to-neutral voltage of the certain phase does not meet the phase shift condition.

## Description

### CROSS-REFERENCE TO RELATED APPLICATIONS

The present disclosure claims the priority to the Chinese Patent Application No. 202010616309.9 filed with the CNIPA on June 29, 2020, the entire contents of which are incorporated herein by reference.

### TECHNICAL FIELD

The present disclosure relates to, but is not limited to, the field of switching power conversion technology.

### BACKGROUND

A three-phase rectifier may cause an input ripple current to exceed a standard range due to selection of hardware parameters, a difference in load or a difference in input source, and may be faced with increased loss, reduced efficiency and adverse influence on input and output indexes when the input ripple current is too large. Therefore, the input ripple current needs to be controlled. The existing methods for reducing the ripple current either increase device cost, or are complicated in calculation and control.

### SUMMARY

In the first aspect, the present disclosure provides a ripple current control method, including: if a phase-to-neutral voltage of a certain phase meets a phase shift condition, respectively determining a driving signal of each switching tube corresponding to the certain phase according to a first carrier wave corresponding to the certain phase; wherein a phase of the first carrier wave is different from a phase of a second carrier wave corresponding to the certain phase by 180°, and the second carrier wave is a carrier wave configured to determine the driving signal of each switching tube corresponding to the certain phase when the phase-to-neutral voltage of the certain phase does not meet the phase shift condition..

In the second aspect, the present disclosure provides an electronic apparatus, including: at least one processor; and a memory having stored thereon at least one program which, when executed by the at least one processor, causes the at least one processor to carry out the ripple current control method described herein.

In the third aspect, the present disclosure provides a computer-readable storage medium having a computer program stored thereon which, when executed by a processor, causes the processor to carried out the ripple current control method described herein.

### BRIEF DESCRIPTION OF DRAWINGS

FIG. 1 is a block diagram of a three-phase rectifier according to the present disclosure;
FIG. 2 is a block diagram of a power conversion unit of a three-phase rectifier according to the present disclosure;
FIG. 3 is a block diagram of a power conversion unit of a three-phase rectifier according to the present disclosure;
FIG. 4 is a block diagram of a control unit of a three-phase rectifier according to the present disclosure;
FIG. 5 is a waveform diagram of three-phase phase-to-neutral voltages according to the present disclosure;
FIG. 6 is a waveform diagram of a driving signal of a switching tube according to the present disclosure;
FIG. 7 is a flowchart illustrating a ripple current control method according to the present disclosure;
FIG. 8 is a waveform diagram of a driving signal of a switching tube according to the present disclosure;
FIG. 9 is a waveform diagram of a driving signal of a switching tube according to the present disclosure; and
FIG. 10 is a block diagram of a ripple current control device according to the present disclosure.

### DETAIL DESCRIPTION OF EMBODIMENTS

In order to enable those of ordinary skill in the art to better understand the technical solutions of the present disclosure, a ripple current control method and device, an electronic apparatus, and a computer-readable storage medium provided by the present disclosure are described in detail below with reference to the drawings.

Exemplary implementations will be described more fully below with reference to the drawings, but the exemplary implementations may be embodied in different forms, and should not be interpreted as being limited to the implementations described herein. Rather, the exemplary implementations are provided to make the present disclosure thorough and complete, and are intended to enable those of ordinary skill in the art to fully understand the scope of the present disclosure.

All implementations of the present disclosure and the features therein may be combined with each other if no conflict is incurred.

The term "and/or" used herein includes any combination and all combinations of at least one associated listed item.

The terms used herein are merely used to describe specific implementations, and are not intended to limit the present disclosure. As used herein, "a" and "the" which indicate a singular form are intended to include a plural form, unless expressly stated in the context. It should be further understood that the term(s) "comprise" and/or "be made of" used herein indicate(s) the presence of features, integers, operations, elements and/or components, but do not exclude the presence or addition of at least one other feature, integer, operation, element, component and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

As requirements are continuously increasing and the technology is continuously progressing, competitive advantages of three-phase rectifier products are mainly reflected in three aspects, i.e., an increase in power density, an increase in efficiency and a decrease in cost. Three-phase Power Factor Correction (PFC) rectifiers mainly include passive PFC rectifiers and active PFC rectifiers. Due to the disadvantages of high harmonic content of input current and limitation of output voltage by input voltage, the passive PFC rectifiers fail to keep up with development trends of current rectifier markets. Therefore, the active PFC rectifiers among the current rectifier products are applied more widely.

The three-phase active PFC rectifiers can keep synchronization of phases of three-phase input currents and three-phase input voltages without distortion while rectifying an input alternating current voltage into a direct current voltage and outputting the direct current voltage. The current three-phase PFC rectifiers have various topology types. Traditional uncontrolled rectifiers or semi-controlled rectifiers are not completely controllable, and thus are far from meeting current requirements in terms of performance; and traditional two-level rectifiers are also far from meeting the requirements of users on high voltage, large power and high performance. Compared with the other topology types, Vienna rectifiers have the advantages of simple structure, small device stress of switching tube, no risk of short circuit, and low harmonic content, and are widely applied to occasions with high requirements on output power, power density, and power factor improvement; and Totem rectifiers have the advantages of few used devices, low conduction loss, and high efficiency, and thus draw more and more attention in the field of application of the three-phase rectifiers.

However, no three-phase rectifiers, even the Vienna rectifiers or the Totem rectifiers, can avoid the related problem of optimizing an input ripple current. The three-phase rectifiers may cause the input ripple current to exceed the standard range due to the selection of the hardware parameters, the difference in load or the difference in input source, and may be faced with the increased loss, the reduced efficiency and the adverse influence on the input and output indexes when the input ripple current is too large. Therefore, the input ripple current needs to be controlled.

The related methods for reducing the input ripple current are divided into hardware methods and software methods.

The common hardware methods for reducing the input ripple current include the following two methods. The first method is inductive coupling, which needs addition of a large number of components such as inductors and switching tubes, resulting in an increase in device cost; and the second method adopts the interleaving technology, which divides each phase into two branches connected in parallel and then respectively drives the branches in an interleaving manner, resulting the increase in the device cost and an increase in control complexity.

The cutting-edge software method among the current software methods applies the space vector control technology to software, and performs control by a signal processor through complex digital logic computing. However, the method is complicated in calculation and control, and has a higher requirement on a Digital Signal Processing (DSP) controller, which also increases the cost.

It should be noted that the ripple current control method and device, the electronic apparatus, and the computer-readable storage medium provided by the present disclosure may achieve control of ripple currents of three-phase rectifiers and three-phase inverters. The descriptions below are given by taking a three-phase rectifier as an example, and an implementation process of the present disclosure of a three-phase inverter is similar to that of the three-phase rectifier.

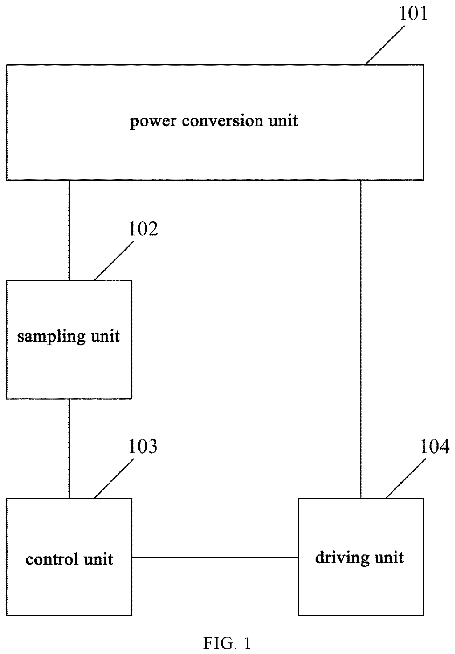

FIG. 1 is a block diagram of a three-phase rectifier according to the present disclosure. As shown in FIG. 1, the three-phase rectifier includes a power conversion unit 101, a sampling unit 102, a control unit 103, and a driving unit 104.

In some exemplary implementations, the power conversion unit 101 is configured to convert an alternating current voltage of an input power supply into a direct current voltage; the sampling unit 102 is configured to sample three-phase phase-to-neutral voltages of the input power supply, currents of three-phase inductors, and three-phase BUS voltages (i.e., voltages across BUS capacitors); the control unit 103 is configured to calculate a driving signal of each switching tube according to the three-phase phase-to-neutral voltages of the input power supply, the currents of the three-phase inductors, and the three-phase BUS voltages sampled by the sampling unit 102 and output the driving signal to the driving unit 104; and the driving unit 104 is configured to drive a switching tube of the power conversion unit 101 to be on or off according to the driving signal, so as to control an output BUS voltage.

In some exemplary implementations, the sampling unit 102 and the control unit 103 are implemented by a same DSP chip.

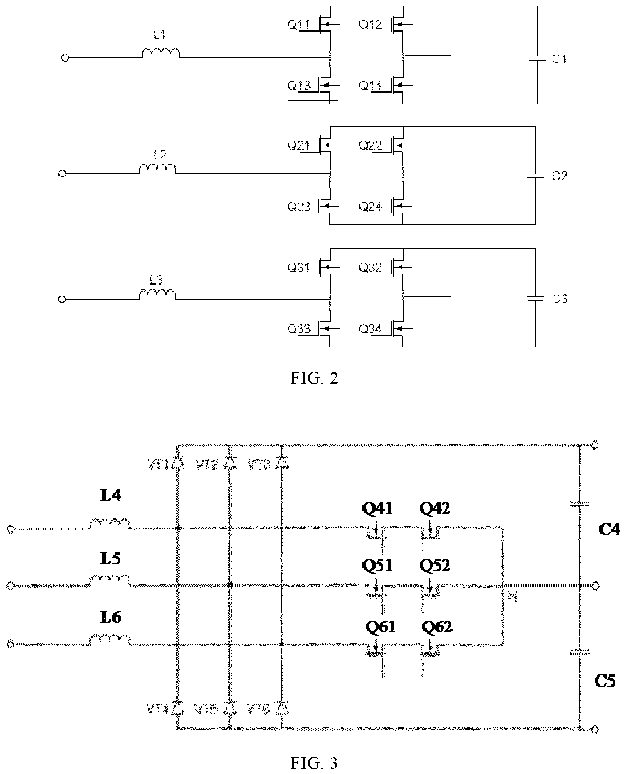

FIG. 2 is a block diagram of a power conversion unit of a three-phase rectifier according to the present disclosure. A topology of the power conversion unit is given in FIG. 2 by merely taking a three-phase Totem rectifier as an example, and the topologies of power conversion units of other three-phase rectifiers also fall within the scope of the present disclosure.

As shown in FIG. 2, the power conversion unit of the three-phase Totem rectifier includes: three single-phase rectifier circuits connected in a manner of star connection. Each single-phase rectifier circuit includes: one inductor, two pairs of switching tubes, and one BUS capacitor.

As shown in FIG. 2, a first-phase rectifier circuit includes: a first inductor L1, a first switching tube Q11, a second switching tube Q12, a third switching tube Q13, a fourth switching tube Q14, and a first BUS capacitor C1; a second-phase rectifier circuit includes: a second inductor L2, a fifth switching tube Q21, a sixth switching tube Q22, a seventh switching tube Q23, an eighth switching tube Q24, and a second BUS capacitor C2; and a third-phase rectifier circuit includes: a third inductor L3, a ninth switching tube Q31, a tenth switching tube Q32, an eleventh switching tube Q33, a twelfth switching tube Q34, and a third BUS capacitor C3.

One terminal of the first inductor L1 is connected to a first phase of the input power supply, the other terminal of the first inductor L1 is simultaneously connected to a first electrode of the first switching tube Q11 and a second electrode of the third switching tube Q13, a second electrode of the first switching tube Q11 is connected to a second electrode of the second switching tube Q12, a first electrode of the second switching tube Q12 is connected to a second electrode of the fourth switching tube Q14, a first electrode of the third switching tube Q13 is connected to a first electrode of the fourth switching tube Q14, one terminal of the first BUS capacitor C1 is connected to the second electrode of the second switching tube Q12, and the other terminal of the first BUS capacitor C1 is connected to the first electrode of the fourth switching tube Q14.

One terminal of the second inductor L2 is connected to a second phase of the input power supply, the other terminal of the second inductor L2 is simultaneously connected to a first electrode of the fifth switching tube Q21 and a second electrode of the seventh switching tube Q23, a second electrode of the fifth switching tube Q21 is connected to a second electrode of the sixth switching tube Q22, a first electrode of the sixth switching tube Q22 is connected to a second electrode of the eighth switching tube Q24, a first electrode of the seventh switching tube Q23 is connected to a first electrode of the eighth switching tube Q24, one terminal of the second BUS capacitor C2 is connected to the second electrode of the sixth switching tube Q22, and the other terminal of the second BUS capacitor C2 is connected to the first electrode of the eighth switching tube Q24.

One terminal of the third inductor L3 is connected to a third phase of the input power supply, the other terminal of the third inductor L3 is simultaneously connected to a first electrode of the ninth switching tube Q31 and a second electrode of the eleventh switching tube Q33, a second electrode of the ninth switching tube Q31 is connected to a second electrode of the tenth switching tube Q32, a first electrode of the tenth switching tube Q32 is connected to a second electrode of the twelfth switching tube Q24, a first electrode of the eleventh switching tube Q33 is connected to a first electrode of the twelfth switching tube Q34, one terminal of the third BUS capacitor C3 is connected to the second electrode of the tenth switching tube Q32, and the other terminal of the third BUS capacitor C3 is connected to the first electrode of the twelfth switching tube Q34.

The first electrode of the second switch Q12, the second electrode of the fourth switch Q14, the first electrode of the sixth switch Q22, the second electrode of the eighth switch Q24, the first electrode of the tenth switch Q32, and the second electrode of the twelfth switch Q34 are simultaneously connected to a star connection point.

A third electrode of the first switching tube Q11, a third electrode of the second switching tube Q12, a third electrode of the third switching tube Q13, a third electrode of the fourth switching tube Q14, a third electrode of the fifth switching tube Q21, a third electrode of the sixth switching tube Q22, a third electrode of the seventh switching tube Q23, a third electrode of the eighth switching tube Q24, a third electrode of the ninth switching tube Q31, a third electrode of the tenth switching tube Q32, a third electrode of the eleventh switching tube Q33, and a third electrode of the twelfth switching tube Q34 are connected to the driving unit 104.

It should be noted that the first switching tube Q11 and the third switching tube Q13 are a pair of upper and lower tubes, the second switching tube Q12 and the fourth switching tube Q14 are a pair of upper and lower tubes, the driving signals of the two switching tubes in the same pair of upper and lower tubes are complementary, the driving signals of the first switching tube Q11 and the third switching tube Q13 are the same, and the driving signals of the second switching tube Q12 and the fourth switching tube Q14 are the same.

The fifth switching tube Q21 and the seventh switching tube Q23 are a pair of upper and lower tubes, the sixth switching tube Q22 and the eighth switching tube Q24 are a pair of upper and lower tubes, the driving signals of the two switching tubes in the same pair of upper and lower tubes are complementary, the driving signals of the fifth switching tube Q21 and the seventh switching tube Q23 are the same, and the driving signals of the sixth switching tube Q22 and the eighth switching tube Q24 are the same.

The ninth switching tube Q31 and the eleventh switching tube Q33 are a pair of upper and lower tubes, the tenth switching tube Q32 and the twelfth switching tube Q34 are a pair of upper and lower tubes, the driving signals of the two switching tubes in the same pair of upper and lower tubes are complementary, the driving signals of the ninth switching tube Q31 and the eleventh switching tube Q33 are the same, and the driving signals of the tenth switching tube Q32 and the twelfth switching tube Q34 are the same.

In some exemplary implementations, the first electrodes are source electrodes S, the second electrodes are drain electrodes D, and the third electrodes are gate electrodes G.

In some exemplary implementations, the switching tubes are Metal Oxide Semiconductor (MOS) transistors, and are high-frequency switching tubes. Apparently, the switching tubes may also be implemented as other tubes, and the scope of the implementations of the present disclosure is not limited thereto.

FIG. 3 is a block diagram of a power conversion unit of a three-phase rectifier according to the present disclosure. It should be noted that a topology of the power conversion unit is given in FIG. 3 by merely taking a three-phase Vienna rectifier as an example, and the topologies of power conversion units of other three-phase rectifiers also fall within the scope of the present disclosure.

As shown in FIG. 3, the power conversion unit of the three-phase Vienna rectifier includes: three single-phase rectifier circuits connected in a manner of star connection. Each single-phase rectifier circuit includes: one inductor, a pair of switching tubes, and a pair of power frequency tubes; and an output end of the power conversion unit is connected to a positive BUS capacitor and a negative BUS capacitor, and the positive BUS capacitor and the negative BUS capacitor are connected in series to form total BUS capacitance used as a power conversion result of the power conversion unit.

As shown in FIG. 3, a first-phase rectifier circuit includes: a fourth inductor L4, a thirteenth switching tube Q41, a fourteenth switching tube Q42, a first power frequency tube VT1, a fourth power frequency tube VT4, and a fourth BUS capacitor C4; a second-phase rectifier circuit includes: a fifth inductor L5, a fifteenth switching tube Q51, a sixteenth switching tube Q52, a second power frequency tube VT2, a fifth power frequency tube VT5, and a fifth BUS capacitor C5; and a third-phase rectifier circuit includes: a sixth inductor L6, a seventeenth switching tube Q61, an eighteenth switching tube Q62, a third power frequency tube VT3, a sixth power frequency tube VT6, the fourth BUS capacitor C4, and the fifth BUS capacitor C5.

One terminal of the fourth inductor L4 is connected to a first phase of the input power supply, the other terminal of the fourth inductor L4 is connected to a second electrode of the thirteenth switching tube Q41, a first electrode of the thirteenth switching tube Q41 is connected to a first electrode of the fourteenth switching tube Q42, and a second electrode of the fourteenth switching tube Q42 is connected to a star connection point N.

One terminal of the fifth inductor L5 is connected to a second phase of the input power supply, the other terminal of the fifth inductor L5 is connected to a second electrode of the fifteenth switch Q51, a first electrode of the fifteenth switch Q51 is connected to a first electrode of the sixteenth switch Q52, and a second electrode of the sixteenth switch Q52 is connected to the star connection point N.

One terminal of the sixth inductor L6 is connected to a third phase of the input power supply, the other terminal of the sixth inductor L6 is connected to a second electrode of the seventeenth switch Q61, a first electrode of the seventeenth switch Q61 is connected to a first electrode of the eighteenth switch Q62, and a second electrode of the eighteenth switch Q62 is connected to the star connection point N.

A third electrode of the thirteenth switching tube Q41, a third electrode of the fourteenth switching tube Q42, a third electrode of the fifteenth switching tube Q51, a third electrode of the sixteenth switching tube Q52, a third electrode of the seventeenth switching tube Q61 and a third electrode of the eighteenth switching tube Q62 are connected to the driving unit 104.

One terminal of the fourth BUS capacitor C4 is simultaneously connected to a cathode of the first power frequency tube VT1, a cathode of the second power frequency tube VT2, and a cathode of the third power frequency tube VT3, the other terminal of the fourth BUS capacitor C4 is simultaneously connected to the star connection point N and one terminal of the fifth BUS capacitor C5, and the other terminal of the fifth BUS capacitor C5 is simultaneously connected to an anode of the fourth power frequency tube VT4, an anode of the fifth power frequency tube VT5, and an anode of the sixth power frequency tube VT6.

An anode of the first power frequency tube VT1 is simultaneously connected to the other terminal of the fourth inductor L4 and a cathode of the fourth power frequency tube VT4, an anode of the second power frequency tube VT2 is simultaneously connected to the other terminal of the fifth inductor L5 and a cathode of the fifth power frequency tube VT5, and an anode of the third power frequency tube VT3 is simultaneously connected to the other terminal of the sixth inductor L6 and a cathode of the sixth power frequency tube VT6.

It should be noted that the driving signals of the two switching tubes of the same phase are the same.

In some exemplary implementations, the first electrodes are source electrodes S, the second electrodes are drain electrodes D, and the third electrodes are gate electrodes G.

In some exemplary implementations, the switching tubes are MOS transistors, and are high-frequency switching tubes. Apparently, the switching tubes may also be implemented as other tubes, and the scope of the present disclosure is not limited thereto.

In some exemplary implementations, the power frequency tubes are power diodes or MOS transistors. Apparently, the power frequency tubes may also be implemented as other tubes, and the scope of the implementations of the present disclosure are not limited thereto.

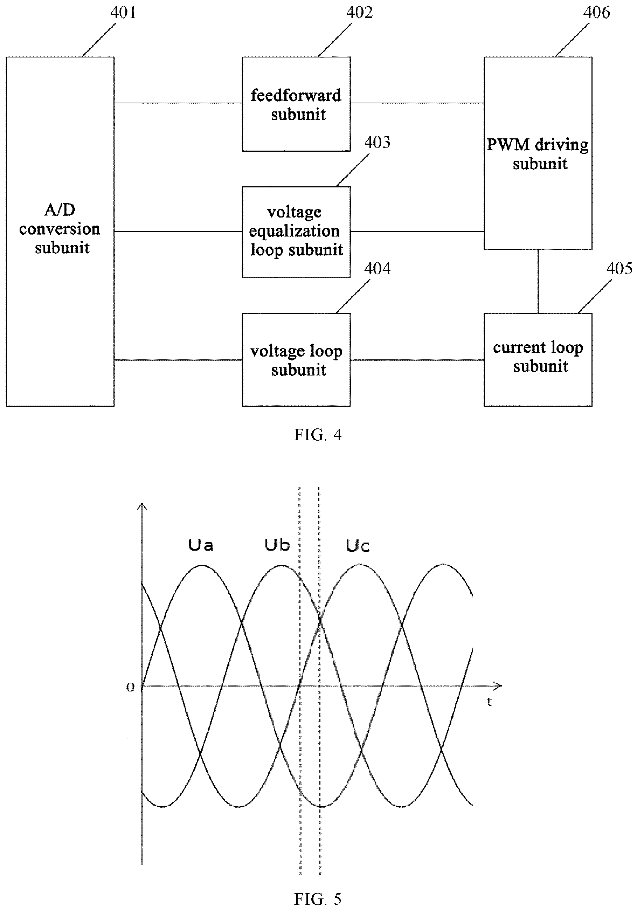

In some exemplary implementations, as shown in FIG. 4, the control unit 103 includes: an A/D conversion subunit 401, a feedforward subunit 402, a voltage equalization loop subunit 403, a voltage loop subunit 404, a current loop subunit 405, a Pulse Width Modulation (PWM) driving subunit 406.

The A/D conversion subunit 401 is configured to convert the three-phase phase-to-neutral voltages of the input power supply, the currents of the three-phase inductors, and the three-phase BUS voltages sampled by the sampling unit 102 into digital signals, restore the digital signals of the three-phase phase-to-neutral voltages to the actual three-phase phase-to-neutral voltages, restore the digital signals of the currents of the three-phase inductors to the actual currents, and restore the digital signals of the three-phase BUS voltages to the actual three-phase BUS voltages.

The feedforward subunit 402 is configured to calculate a feedforward duty ratio D₀ of each phase according to phase-lock angles, the actual three-phase phase-to-neutral voltages and a target voltage (i.e., a target value of the BUS voltages), and the feedforward duty ratio D₀ is a main part of a final duty ratio.

For the three-phase Totem rectifier, the voltage equalization loop subunit 403 is configured to compare absolute values of the actual three-phase BUS voltages, calculate a difference between the two actual three-phase BUS voltages with the first two largest absolute values among the actual three-phase BUS voltages, take the difference as an error input to a voltage equalization loop, and calculate a voltage-equalization regulation duty ratio D₁ with the voltage equalization loop (including, but not limited to, a P regulator, a PI regulator, and a PID regulator), and the voltage-equalization regulation duty ratio D₁ is a fine-tuning part of the final duty ratio.

For the three-phase Vienna rectifier, the voltage equalization loop subunit 403 is configured to take a difference between an actual positive BUS voltage (i.e., a voltage across the fourth BUS capacitor C4) and an actual negative BUS voltage (i.e., a voltage across the fifth BUS capacitor C5) as an error input to a voltage equalization loop, and output a voltage-equalization regulation duty D₁ with a comparison regulator, and the voltage-equalization regulation duty D₁ is a fine-tuning part of the final duty ratio.

For the three-phase Totem rectifier, the voltage loop subunit 404 is configured to output a given current of a current loop with a voltage loop, and output differences between the given current and the actual currents of the three-phase inductors as an input to a current loop.

For the three-phase Vienna rectifier, the voltage loop subunit 404 is configured to calculate an average of the three-phase BUS voltages, take a difference between the average of the three-phase BUS voltages and the target voltage as an error input to a voltage loop, output a given current of a current loop with the voltage loop (including, but not limited to, a P regulator, a PI regulator, and a PID regulator), and output differences between the given current and the actual currents of the three-phase inductors as an input to the current loop.

The current loop subunit 405 is configured to output a current regulation duty ratio D₂ with the current loop, and the current regulation duty ratio D₂ is another fine-tuning part of the final duty ratio;

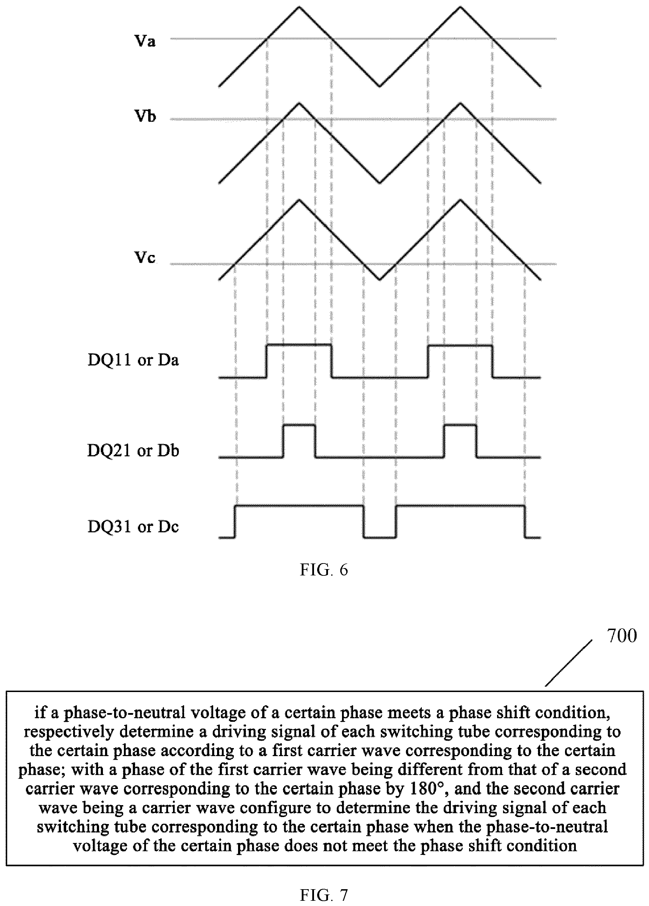

The PWM driving subunit 406 is configured to output a driving signal of each switching tube to the driving unit 104 according to the feedforward duty ratio D₀, the voltage-equalization regulation duty ratio D₁ and the current regulation duty ratio D₂. Illustratively, assuming that waveforms of the three-phase phase-to-neutral voltages are as shown in FIG. 5, the feedforward duty ratio D₀, the voltage-equalization regulation duty ratio D₁ and the current regulation duty ratio D₂ are added together to obtain the final duty ratio; and a comparison value of the phase-to-neutral voltage of each phase is calculated according to the final duty ratio, that is, modulated waves Va, Vb and Vc shown in FIG. 6 are calculated, and the modulated wave of each phase is compared with a triangular carrier wave corresponding to the phase to obtain a waveform of the driving signal of the switching tube of the phase. In FIG. 6, DQ11 is the waveform of the driving signal of the first switching tube Q11 of the three-phase Totem rectifier, DQ21 is the waveform of the driving signal of the fifth switching tube Q21 of the three-phase Totem rectifier, and DQ31 is the waveform of the driving signal of the ninth switching tube Q31 of the three-phase Totem rectifier; and Da is the waveform of the driving signal of the thirteenth switching tube Q41 of the three-phase Vienna rectifier, Db is the waveform of the driving signal of the fifteenth switching tube Q51 of the three-phase Vienna rectifier, and Dc is the waveform of the driving signal of the seventeenth switching tube Q61 of the three-phase Vienna rectifier.

Assuming that a relationship between the three-phase phase-to-neutral voltages is Ua<0<Uc<Ub at a certain moment, as shown by the interval confined by the dotted lines in FIG. 5, at this moment, the phase-to-neutral voltage of a phase A (i.e., the first phase) is in the negative half cycle, the phase-to-neutral voltage of a phase B (i.e., the second phase) and the phase-to-neutral voltage of a phase C (i.e., the third phase) are in the positive half cycle, and the driving signals corresponding the three phases are not interleaved with each other due to in-phase triangular carrier waves corresponding to the three phases, with the result that an input ripple current is not effectively controlled.

FIG. 7 is a flowchart illustrating a ripple current control method according to the present disclosure.

In the first aspect, with reference to FIG. 7, the present disclosure provides the ripple current control method, which may include: operation 700, if a phase-to-neutral voltage of a certain phase meets a phase shift condition, respectively determining a driving signal of each switching tube corresponding to the certain phase according to a first carrier wave corresponding to the certain phase; and a phase of the first carrier wave is different from that of a second carrier wave corresponding to the certain phase by 180°, and the second carrier wave is a carrier wave configured to determine the driving signal of each switching tube corresponding to the certain phase when the phase-to-neutral voltage of the certain phase does not meet the phase shift condition.

In some exemplary implementations, the method further includes: if the phase-to-neutral voltage of the certain phase does not meet the phase shift condition, determining the driving signal of each switching tube corresponding to the certain phase according to a modulated wave corresponding to the certain phase and the second carrier wave.

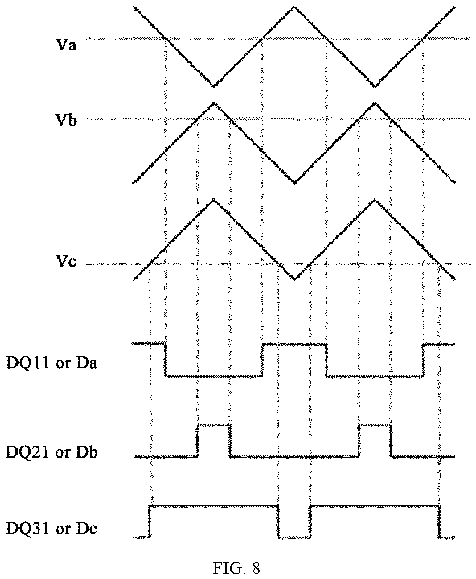

In some exemplary implementations, the phase-to-neutral voltage of the certain phase meeting the phase shift condition includes: a sign of the phase-to-neutral voltage of the certain phase being negative; and the phase-to-neutral voltage of the certain phase not meeting the phase shift condition includes: the sign of the phase-to-neutral voltage of the certain phase being positive. For example, assuming that the waveforms of the three-phase phase-to-neutral voltages are as shown in FIG. 5, for a certain phase (e.g. the phase A), if the sign of the phase-to-neutral voltage of the phase is negative, that is, the phase-to-neutral voltage of the phase is in the negative half cycle, the first carrier wave is used to determine the driving signal of the switching tube corresponding to the phase, as shown in FIG. 8; if the sign of the phase-to-neutral voltage of the phase is positive, that is, the phase-to-neutral voltage of the phase is in the positive half cycle, the second carrier wave is used to determine the driving signal of the switching tube corresponding to the phase; and the phase of the first carrier wave is different from that of the second carrier wave by 180°.

It should be noted that, in the method of determining whether the driving signal of the switching tube corresponding to the certain phase is determined according to the first carrier wave or the second carrier wave by determining whether the phase-to-neutral voltage of the certain phase meets the phase shift condition, the determination and processing processes of the phase-to-neutral voltages of the three phases are completely independent of each other, and whether the phase-to-neutral voltages of the other two phases are in the negative half cycle does not need to be considered when the phase-to-neutral voltage of one phase is processed, that is, if the phase-to-neutral voltage of the phase A is in the negative half cycle, the driving signal of each switching tube corresponding to the phase A is determined according to the first carrier wave corresponding to the phase A; if the phase-to-neutral voltage of the phase B is in the negative half cycle, the driving signal of each switching tube corresponding to the phase B is determined according to the first carrier wave corresponding to the phase B; and if the phase-to-neutral voltage of the phase C is in the negative half cycle, the driving signal of each switching tube corresponding to the phase C is determined according to the first carrier wave corresponding to the phase C.

Assuming that the relationship between the three-phase phase-to-neutral voltages is Ua<0<Uc<Ub at the certain moment, as shown by the interval confined by the dotted lines in FIG. 5, at this moment, the phase-to-neutral voltage of the phase A (i.e., the first phase) is in the negative half cycle, the phase-to-neutral voltage of the phase B (i.e., the second phase) and the phase-to-neutral voltage of the phase C (i.e., the third phase) are in the positive half cycle, and the driving signal of the switching tube corresponding to the certain phase is interleaved with the driving signals of the switching tubes corresponding to the other two phases as shown in FIG. 8 after the method of the present disclosure is carried out, so that the number of switching states of the three-phase rectifier or the three-phase inverter is increased, thereby reducing the ripple current, that is, the control of the ripple current is achieved by simply determining whether the sign of the phase-to-neutral voltage of the certain phase is negative and using a simple phase shift technique.

In some exemplary implementations, the phase-to-neutral voltage of the certain phase meeting the phase shift condition includes: the sign of the phase-to-neutral voltage of the certain phase being positive; and the phase-to-neutral voltage of the certain phase not meeting the phase shift condition includes: the sign of the phase-to-neutral voltage of the certain phase being negative. For example, assuming that the waveforms of the three-phase phase-to-neutral voltages are as shown in FIG. 5, for a certain phase (e.g. the phase A), if the sign of the phase-to-neutral voltage of the phase is positive, that is, the phase-to-neutral voltage of the phase is in the positive half cycle, the first carrier wave is used to determine the driving signal of the switching tube corresponding to the phase; if the sign of the phase-to-neutral voltage of the phase is negative, that is, the phase-to-neutral voltage of the phase is in the negative half cycle, the second carrier wave is used to determine the driving signal of the switching tube corresponding to the phase; and the phase of the first carrier wave is different from that of the second carrier wave by 180°.

It should be noted that, in the method of determining whether the driving signal of the switching tube corresponding to the certain phase is determined according to the first carrier wave or the second carrier wave by determining whether the phase-to-neutral voltage of the certain phase meets the phase shift condition, the determination and processing processes of the phase-to-neutral voltages of the three phases are completely independent of each other, and whether the phase-to-neutral voltages of the other two phases are in the positive half cycle does not need to be considered when the phase-to-neutral voltage of one phase is processed, that is, if the phase-to-neutral voltage of the phase A is in the positive half cycle, the driving signal of each switching tube corresponding to the phase A is determined according to the first carrier wave corresponding to the phase A; if the phase-to-neutral voltage of the phase B is in the positive half cycle, the driving signal of each switching tube corresponding to the phase B is determined according to the first carrier wave corresponding to the phase B; and if the phase-to-neutral voltage of the phase C is in the positive half cycle, the driving signal of each switching tube corresponding to the phase C is determined according to the first carrier wave corresponding to the phase C.

Assuming that the relationship between the three-phase phase-to-neutral voltages is Ua<0<Uc<Ub at the certain moment, as shown by the interval confined by the dotted lines in FIG. 5, at this moment, the phase-to-neutral voltage of the phase A (i.e., the first phase) is in the negative half cycle, the phase-to-neutral voltage of the phase B (i.e., the second phase) and the phase-to-neutral voltage of the phase C (i.e., the third phase) are in the positive half cycle, and the driving signal of the switching tube corresponding to the phase A is interleaved with the driving signals of the switching tubes corresponding to the phases B and C after the method of the present disclosure is carried out, so that the number of switching states of the three-phase rectifier or the three-phase inverter is increased, thereby reducing the ripple current, that is, the control of the ripple current is achieved by simply determining whether the sign of the phase-to-neutral voltage of the certain phase is negative and using the simple phase shift technique.

In some exemplary implementations, a following case occurs: an Enhanced Pulse Width Modulator (EPWM) cannot perform phase shifting, so that a carrier wave corresponding to a phase corresponding to the EPWM cannot be subjected to phase shifting, with the result that the method of determining whether the driving signal of the switching tube corresponding to the certain phase is determined according to the first carrier wave or the second carrier wave by determining whether the phase-to-neutral voltage of the certain phase meets the phase shift condition cannot be carried out. In response to this case, the present disclosure proposes another implementation method, that is, the phase-to-neutral voltage of the certain phase meeting the phase shift condition includes: the sign of the phase-to-neutral voltage of the certain phase being opposite to that of the phase-to-neutral voltage of a main phase; the phase-to-neutral voltage of the certain phase not meeting the phase shift condition includes: the sign of the phase-to-neutral voltage of the certain phase being the same as that of the phase-to-neutral voltage of the main phase; and the main phase is a phase corresponding the carrier wave which cannot be subjected to phase shifting. For example, assuming that the waveforms of the three-phase phase-to-neutral voltages are as shown in FIG. 5, for a certain phase (e.g., the phase A), if the phase is corresponding to the EWPM and accordingly the carrier wave corresponding to the phase cannot be subjected to phase shifting, the phase may be set as the main phase, and the carrier wave corresponding to the phase is not subjected to the phase shifting; and whether phase shifting needs to be performed on the carrier waves corresponding to the other two phases is determined by determining whether the signs of the phase-to-neutral voltages of the other two phases are the same as that of the phase-to-neutral voltage of the main phase.

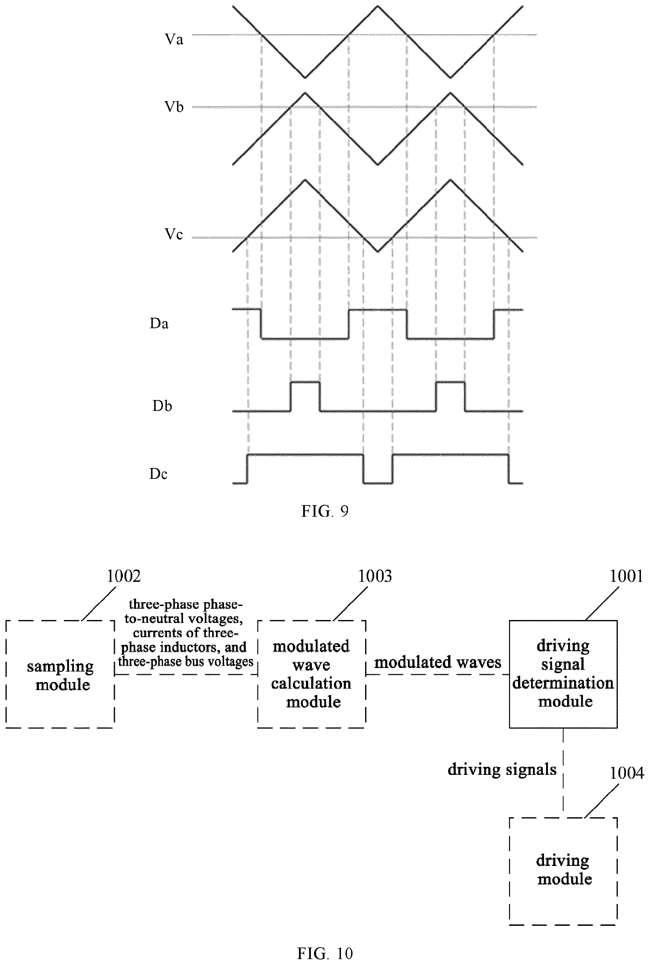

Illustratively, as shown in FIG. 9, if the sign of the phase-to-neutral voltage of the phase A is positive and the sign of the phase-to-neutral voltage of the phase B is negative, or if the sign of the phase-to-neutral voltage of the phase A is negative and the sign of the phase-to-neutral voltage of the phase B is positive, the driving signal of each switching tube corresponding to the phase B is respectively determined according to the first carrier wave corresponding to the phase B; that is, if the phase-to-neutral voltage of the phase A is in the positive half cycle and the phase-to-neutral voltage of the phase B is in the negative half cycle, or if the phase-to-neutral voltage of the phase A is in the negative half cycle and the phase-to-neutral voltage of the phase B is in the positive half cycle, the driving signal of each switching tube corresponding to the phase B is respectively determined according to the first carrier wave corresponding to the phase B.

If the sign of the phase-to-neutral voltage of the phase A is positive and the sign of the phase-to-neutral voltage of the phase B is positive, or if the sign of the phase-to-neutral voltage of the phase A is negative and the sign of the phase-to-neutral voltage of the phase B is negative, the driving signal of each switching tube corresponding to the phase B is respectively determined according to the second carrier wave corresponding to the phase B; that is, if the phase-to-neutral voltage of the phase A is in the positive half cycle and the phase-to-neutral voltage of the phase B is in the positive half cycle, or if the phase-to-neutral voltage of the phase A is in the negative half cycle and the phase-to-neutral voltage of the phase B is in the negative half cycle, the driving signal of each switching tube corresponding to the phase B is respectively determined according to the second carrier wave corresponding to the phase B.

If the sign of the phase-to-neutral voltage of the phase A is positive and the sign of the phase-to-neutral voltage of the phase C is negative, or if the sign of the phase-to-neutral voltage of the phase A is negative and the sign of the phase-to-neutral voltage of the phase C is positive, the driving signal of each switching tube corresponding to the phase C is respectively determined according to the first carrier wave corresponding to the phase C; that is, if the phase-to-neutral voltage of the phase A is in the positive half cycle and the phase-to-neutral voltage of the phase C is in the negative half cycle, or if the phase-to-neutral voltage of the phase A is in the negative half cycle and the phase-to-neutral voltage of the phase C is in the positive half cycle, the driving signal of each switching tube corresponding to the phase C is respectively determined according to the first carrier wave corresponding to the phase C

If the sign of the phase-to-neutral voltage of the phase A is positive and the sign of the phase-to-neutral voltage of the phase C is positive, or if the sign of the phase-to-neutral voltage of the phase A is negative and the sign of the phase-to-neutral voltage of the phase C is negative, the driving signal of each switching tube corresponding to the phase C is respectively determined according to the second carrier wave corresponding to the phase C; that is, if the phase-to-neutral voltage of the phase A is in the positive half cycle and the phase-to-neutral voltage of the phase C is in the positive half cycle, or if the phase-to-neutral voltage of the phase A is in the negative half cycle and the phase-to-neutral voltage of the phase C is in the negative half cycle, the driving signal of each switching tube corresponding to the phase C is respectively determined according to the second carrier wave corresponding to the phase C.

Assuming that the relationship between the three-phase phase-to-neutral voltages is Ua<0<Uc<Ub at the certain moment, as shown by the interval confined by the dotted lines in FIG. 5, at this moment, the phase-to-neutral voltage of the phase A (i.e., the first phase) is in the negative half cycle, the phase-to-neutral voltage of the phase B (i.e., the second phase) and the phase-to-neutral voltage of the phase C (i.e., the third phase) are in the positive half cycle, and the driving signal of the switching tube corresponding to the phase A is interleaved with the driving signals of the switching tubes corresponding to the other two phases as shown in FIG. 9 after the method of the present disclosure is carried out, so that the number of switching states of the three-phase rectifier or the three-phase inverter is increased, thereby reducing the ripple current, that is, the control of the ripple current is achieved by simply determining whether the sign of the phase-to-neutral voltage of the certain phase is the same as that of the phase-to-neutral voltage of the main phase and using the simple phase shift technique.

In some exemplary implementations, a following case occurs: an EPWM cannot perform phase shifting, so that a carrier wave corresponding to a phase corresponding to the EPWM cannot be subjected to phase shifting, with the result that the method of determining whether the driving signal of the switching tube corresponding to the certain phase is determined according to the first carrier wave or the second carrier wave by determining whether the phase-to-neutral voltage of the certain phase meets the phase shift condition cannot be carried out. In response to this case, the present disclosure proposes another implementation method, that is, the phase-to-neutral voltage of the certain phase meeting the phase shift condition includes: the sign of the phase-to-neutral voltage of the certain phase being the same as that of the phase-to-neutral voltage of a main phase; the phase-to-neutral voltage of the certain phase not meeting the phase shift condition includes: the sign of the phase-to-neutral voltage of the certain phase being opposite to that of the phase-to-neutral voltage of the main phase; and the main phase is a phase corresponding the carrier wave which cannot be subjected to phase shifting. For example, assuming that the waveforms of the three-phase phase-to-neutral voltages are as shown in FIG. 5, for a certain phase (e.g., the phase A), if the phase is corresponding to the EWPM and accordingly the carrier wave corresponding to the phase cannot be subjected to phase shifting, the phase may be set as the main phase, and the carrier wave corresponding to the phase is not subjected to the phase shifting; and whether phase shifting needs to be performed on the carrier waves corresponding to the other two phases is determined by determining whether the signs of the phase-to-neutral voltages of the other two phases are the same as that of the phase-to-neutral voltage of the main phase.

Illustratively, if the sign of the phase-to-neutral voltage of the phase A is positive and the sign of the phase-to-neutral voltage of the phase B is positive, or if the sign of the phase-to-neutral voltage of the phase A is negative and the sign of the phase-to-neutral voltage of the phase B is negative, the driving signal of each switching tube corresponding to the phase B is respectively determined according to the first carrier wave corresponding to the phase B; that is, if the phase-to-neutral voltage of the phase A is in the positive half cycle and the phase-to-neutral voltage of the phase B is in the positive half cycle, or if the phase-to-neutral voltage of the phase A is in the negative half cycle and the phase-to-neutral voltage of the phase B is in the negative half cycle, the driving signal of each switching tube corresponding to the phase B is respectively determined according to the first carrier wave corresponding to the phase B.

If the sign of the phase-to-neutral voltage of the phase A is positive and the sign of the phase-to-neutral voltage of the phase B is negative, or if the sign of the phase-to-neutral voltage of the phase A is negative and the sign of the phase-to-neutral voltage of the phase B is positive, the driving signal of each switching tube corresponding to the phase B is respectively determined according to the second carrier wave corresponding to the phase B; that is, if the phase-to-neutral voltage of the phase A is in the positive half cycle and the phase-to-neutral voltage of the phase B is in the negative half cycle, or if the phase-to-neutral voltage of the phase A is in the negative half cycle and the phase-to-neutral voltage of the phase B is in the positive half cycle, the driving signal of each switching tube corresponding to the phase B is respectively determined according to the second carrier wave corresponding to the phase B.

If the sign of the phase-to-neutral voltage of the phase A is positive and the sign of the phase-to-neutral voltage of the phase C is positive, or if the sign of the phase-to-neutral voltage of the phase A is negative and the sign of the phase-to-neutral voltage of the phase C is negative, the driving signal of each switching tube corresponding to the phase C is respectively determined according to the first carrier wave corresponding to the phase C; that is, if the phase-to-neutral voltage of the phase A is in the positive half cycle and the phase-to-neutral voltage of the phase C is in the positive half cycle, or if the phase-to-neutral voltage of the phase A is in the negative half cycle and the phase-to-neutral voltage of the phase C is in the negative half cycle, the driving signal of each switching tube corresponding to the phase C is respectively determined according to the first carrier wave corresponding to the phase C

If the sign of the phase-to-neutral voltage of the phase A is positive and the sign of the phase-to-neutral voltage of the phase C is negative, or if the sign of the phase-to-neutral voltage of the phase A is negative and the sign of the phase-to-neutral voltage of the phase C is positive, the driving signal of each switching tube corresponding to the phase C is respectively determined according to the second carrier wave corresponding to the phase C; that is, if the phase-to-neutral voltage of the phase A is in the positive half cycle and the phase-to-neutral voltage of the phase C is in the negative half cycle, or if the phase-to-neutral voltage of the phase A is in the negative half cycle and the phase-to-neutral voltage of the phase C is in the positive half cycle, the driving signal of each switching tube corresponding to the phase C is respectively determined according to the second carrier wave corresponding to the phase C.

Assuming that the relationship between the three-phase phase-to-neutral voltages is 0<Ua<Uc<Ub at a certain moment, the phase-to-neutral voltages of the phase A (i.e., the first phase), the phase B (i.e., the second phase) and the phase C (i.e., the third phase) are all in the negative half cycle at this moment, and the driving signal of the switching tube corresponding to the phase A is interleaved with the driving signals of the switching tubes corresponding to the other two phases after the method of the present disclosure is carried out, so that the number of switching states of the three-phase rectifier or the three-phase inverter is increased, thereby reducing the ripple current, that is, the control of the ripple current is achieved by simply determining whether the sign of the phase-to-neutral voltage of the certain phase is the same as that of the phase-to-neutral voltage of the main phase and using the simple phase shift technique.

It should be noted that, in specific implementations, the second carrier wave corresponding to the certain phase may be subjected to 180° phase shifting when the phase-to-neutral voltage of the certain phase meets the phase shift condition; and the second carrier wave corresponding to the certain phase is not subjected to the phase shifting when the phase-to-neutral voltage of the certain phase does not meet the phase shift condition.

In some exemplary implementations, before determining whether the phase-to-neutral voltage of the certain phase meets the phase shift condition, the method further includes: sampling the three-phase phase-to-neutral voltages, the currents of the three-phase inductors, and the three-phase BUS voltages; and calculating the modulated waves corresponding to the three phases according to the three-phase phase-to-neutral voltages, the currents of the three-phase inductors, and the three-phase BUS voltages.

Correspondingly, respectively determining the driving signal of each switching tube corresponding to the certain phase according to the first carrier wave corresponding to the certain phase includes: respectively determining the driving signal of each switching tube corresponding to the certain phase according to the modulated wave and the first carrier wave corresponding to the certain phase.

Correspondingly, respectively determining the driving signal of each switching tube corresponding to the certain phase according to the second carrier wave corresponding to the certain phase includes: respectively determining the driving signal of each switching tube corresponding to the certain phase according to the modulated wave and the second carrier wave corresponding to the certain phase.

In some exemplary implementations, a way of calculating the modulated waves corresponding to the three phases according to the three-phase phase-to-neutral voltages, the currents of the three-phase inductors, and the three-phase BUS voltages is the same as what is described about the function of the control unit in the above implementations, and thus will not be repeated here.

In some exemplary implementations, as shown in FIG. 8 and FIG. 9, DQ11 is the waveform of the driving signal of the first switching tube Q11 of the three-phase Totem rectifier, DQ21 is the waveform of the driving signal of the fifth switching tube Q21 of the three-phase Totem rectifier, and DQ31 is the waveform of the driving signal of the ninth switching tube Q31 of the three-phase Totem rectifier; and Da is the waveform of the driving signal of the thirteenth switching tube Q41 of the three-phase Vienna rectifier, Db is the waveform of the driving signal of the fifteenth switching tube Q51 of the three-phase Vienna rectifier, and Dc is the waveform of the driving signal of the seventeenth switching tube Q61 of the three-phase Vienna rectifier.

In some exemplary implementations, after respectively determining the driving signal of each switching tube corresponding to the certain phase according to the first carrier wave corresponding to the certain phase, the method further includes: respectively driving the corresponding switching tube to be switched on or off according to the driving signal of each switching tube.

In some exemplary implementations, after respectively determining the driving signal of each switching tube corresponding to the certain phase, the method further includes: respectively driving the corresponding switching tube to be switched on or off according to the driving signal of each switching tube.

With the ripple current control method provided by the present disclosure, when the phase-to-neutral voltage of the certain phase meets the phase shift condition, the phase of the second carrier wave configured to determine the driving signal of each switching tube corresponding to the certain phase when the phase-to-neutral voltage of the certain phase does not meet the phase shift condition is shifted by 180° to obtain the first carrier wave, the driving signal of each switching tube corresponding to the certain phase is respectively determined based on the first carrier wave, at this time, the driving signal of each switching tube corresponding to the other two phases is respectively determined according to the second carrier wave if the phase-to-neutral voltages of the other two phases do not meet the phase shift condition, so that the driving signal of the switching tube corresponding to the certain phase is interleaved with the driving signals of the switching tubes corresponding to the other two phases, which increases the number of switching states of the three-phase rectifier or the three-phase inverter, thereby reducing the ripple current, that is, the control of the ripple current is achieved by simply determining whether the phase-to-neutral voltage of the certain phase meets the phase shift condition and using the simple phase shift technique.

In the second aspect, an implementation of the present disclosure provides an electronic apparatus, including: at least one processor; and a memory having stored thereon at least one program, which, when executed by the at least one processor, causes the at least one processor to carry out the ripple current control method according to any implementation above.

The processor is a device having data processing capability, and includes, but is not limited to, a Central Processing Unit (CPU); and the memory is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH).

In some implementations, the processor and the memory are connected to each other through a bus, and then are connected to other components of a computing device.

In the third aspect, an implementation of the present disclosure provides a computer-readable storage medium having a computer program stored thereon. When the computer program is executed by a processor, the ripple current control method provided in any implementation above is carried out.

FIG. 10 is a block diagram of a ripple current control device according to an implementation of the present disclosure.

In the fourth aspect, with reference to FIG. 10, the ripple current control device provided by the implementation of the present disclosure includes: a driving signal determination module 1001 configured to respectively determine a driving signal of each switching tube corresponding to a certain phase according to a first carrier wave corresponding to the certain phase if a phase-to-neutral voltage of the certain phase meets a phase shift condition; and a phase of the first carrier wave is different from that of a second carrier wave corresponding to the certain phase by 180°, and the second carrier wave is a carrier wave configured to determine the driving signal of each switching tube corresponding to the certain phase when the phase-to-neutral voltage of the certain phase does not meet the phase shift condition.

In some exemplary implementations, the drive signal determination module 1001 is further configured to determine the driving signal of each switching tube corresponding to the certain phase according to the second carrier wave corresponding to the certain phase if the phase-to-neutral voltage of the certain phase does not meet the phase shift condition.

In some exemplary implementations, the phase-to-neutral voltage of the certain phase meeting the phase shift condition includes: a sign of the phase-to-neutral voltage of the certain phase being negative; and the phase-to-neutral voltage of the certain phase not meeting the phase shift condition includes: the sign of the phase-to-neutral voltage of the certain phase being positive.

In some exemplary implementations, the phase-to-neutral voltage of the certain phase meeting the phase shift condition includes: the sign of the phase-to-neutral voltage of the certain phase being positive; and the phase-to-neutral voltage of the certain phase not meeting the phase shift condition includes: the sign of the phase-to-neutral voltage of the certain phase being negative.

In some exemplary implementations, the phase-to-neutral voltage of the certain phase meeting the phase shift condition includes: the sign of the phase-to-neutral voltage of the certain phase being opposite to that of a phase-to-neutral voltage of a main phase; and the phase-to-neutral voltage of the certain phase not meeting the phase shift condition includes: the sign of the phase-to-neutral voltage of the certain phase being the same as that of the phase-to-neutral voltage of the main phase.

In some exemplary implementations, the phase-to-neutral voltage of the certain phase meeting the phase shift condition includes: the sign of the phase-to-neutral voltage of the certain phase being the same as that of the phase-to-neutral voltage of the main phase; and the phase-to-neutral voltage of the certain phase not meeting the phase shift condition includes: the sign of the phase-to-neutral voltage of the certain phase being opposite to that of the phase-to-neutral voltage of the main phase.

In some exemplary implementations, the device further includes: a sampling module 1002 configured to sample three-phase phase-to-neutral voltages, currents of three-phase inductors, and three-phase BUS voltages; and a modulated wave calculation module 1003 configured to calculate modulated waves corresponding to three phases according to the three-phase phase-to-neutral voltages, the currents of the three-phase inductors, and the three-phase BUS voltages. The drive signal determination module 1001 is further configured to respectively determine the driving signal of each switching tube corresponding to the certain phase according to the modulated wave and the first carrier wave corresponding to the certain phase.

In some exemplary implementations, the device further includes: a driving module 1004 configured to respectively drive the corresponding switching tube to be switched on or off according to the driving signal of each switching tube.

It should be noted that the function of the sampling module 1002 may be implemented by adopting the sampling unit 102, the function of the modulated wave calculation module 1003 may be implemented by adopting the driving unit 104, and the functions of the driving signal determination module 1001 and the driving module 1004 may be implemented by adopting the driving unit 104.

Specific implementation processes of the ripple current control device are the same as the above-mentioned specific implementation processes of the ripple current control method, and thus will not be repeated here.

It should be understood by those of ordinary skill in the art that the functional modules/units in all or some of the operations, systems and devices disclosed in the above method may be implemented as software, firmware, hardware, or suitable combinations thereof. If implemented as hardware, the division between the functional modules/units stated above is not necessarily corresponding to the division of physical components; and for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory, a Read-Only Memory, an Electrically Erasable Programmable Read-Only Memory (EEPROM), a flash memory or other storage technology, a Compact Disc Read Only Memory (CD-ROM), a Digital Versatile Disc (DVD) or other optical discs, a magnetic cassette, a magnetic tape, a magnetic disk or other magnetic memories, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details can be made without departing from the scope of the present disclosure of the appended claims.

## Claims

1. A ripple current control method, comprising:
in response to a phase-to-neutral voltage of a certain phase meeting a phase shift condition, respectively determining a driving signal of each switching tube corresponding to the certain phase according to a first carrier wave corresponding to the certain phase;
wherein a phase of the first carrier wave is different from a phase of a second carrier wave corresponding to the certain phase by 180°, and the second carrier wave is a carrier wave configured to determine the driving signal of each switching tube corresponding to the certain phase when the phase-to-neutral voltage of the certain phase does not meet the phase shift condition.

2. The method of claim 1, further comprising:
in response to the phase-to-neutral voltage of the certain phase not meeting the phase shift condition, determining the driving signal of each switching tube corresponding to the certain phase according to the second carrier wave corresponding to the certain phase.

3. The method of claim 1 or 2, wherein the phase-to-neutral voltage of the certain phase meeting the phase shift condition comprises: a sign of the phase-to-neutral voltage of the certain phase being negative; and the phase-to-neutral voltage of the certain phase not meeting the phase shift condition comprises: the sign of the phase-to-neutral voltage of the certain phase being positive.

4. The method of claim 1 or 2, wherein the phase-to-neutral voltage of the certain phase meeting the phase shift condition comprises: a sign of the phase-to-neutral voltage of the certain phase being positive; and the phase-to-neutral voltage of the certain phase not meeting the phase shift condition comprises: the sign of the phase-to-neutral voltage of the certain phase being negative.

5. The method of claim 1 or 2, wherein the phase-to-neutral voltage of the certain phase meeting the phase shift condition comprises: a sign of the phase-to-neutral voltage of the certain phase being opposite to a sign of a phase-to-neutral voltage of a main phase, and the phase-to-neutral voltage of the certain phase not meeting the phase shift condition comprises: the sign of the phase-to-neutral voltage of the certain phase being the same as the sign of the phase-to-neutral voltage of the main phase.

6. The method of claim 1 or 2, wherein the phase-to-neutral voltage of the certain phase meeting the phase shift condition comprises: a sign of the phase-to-neutral voltage of the certain phase being the same as a sign of a phase-to-neutral voltage of a main phase, and the phase-to-neutral voltage of the certain phase not meeting the phase shift condition comprises: the sign of the phase-to-neutral voltage of the certain phase being opposite to the sign of the phase-to-neutral voltage of the main phase.

7. The method of claim 1 or 2, before determining whether the phase-to-neutral voltage of the certain phase meets the phase shift condition, further comprising: sampling three-phase phase-to-neutral voltages, currents of three-phase inductors, and three-phase BUS voltages; and calculating modulated waves corresponding to three phases according to the three-phase phase-to-neutral voltages, the currents of the three-phase inductors, and the three-phase BUS voltages; and
respectively determining the driving signal of each switching tube corresponding to the certain phase according to the first carrier wave corresponding to the certain phase comprises: respectively determining the driving signal of each switching tube corresponding to the certain phase according to the modulated wave and the first carrier wave corresponding to the certain phase.

8. The method of claim 1 or 2, after respectively determining the driving signal of each switching tube corresponding to the certain phase, further comprising:
respectively driving the corresponding switching tube to be switched on or off according to the driving signal of each switching tube.

9. An electronic apparatus, comprising:
at least one processor; and
a memory having stored thereon at least one program, which, when executed by the at least one processor, causes the at least one processor to carry out the ripple current control method of any one of claims 1 to 8.

10. A computer-readable storage medium having a computer program stored thereon which, when executed by a processor, causes the processor to carry out the ripple current control method of any one of claims 1 to 8.
